# EUROPEAN PATENT SPECIFICATION

(11) **EP 4 652 583 B1**
(45) Date of publication and mention of the grant of the patent: **09.09.2026**
(21) Application number: 24702030.8
(22) Date of filing: 16.01.2024
(51) Int. Cl.: G07F 17/00, A47J 37/04, A23L 5/10, A47J 37/06, H05B 1/02

(54) **COOKING APPARATUS FOR ROBOTIC CHEF WITH INTEGRATED DRIVE SYSTEM FOR MULTIPLE COOKING SPACES**
KOCHVORRICHTUNG FÜR ROBOTERCHEF MIT INTEGRIERTEM ANTRIEBSSYSTEM FÜR MEHRERE KOCHRÄUME
APPAREIL DE CUISSON POUR CHEF ROBOTIQUE AVEC SYSTÈME D'ENTRAÎNEMENT INTÉGRÉ POUR DE MULTIPLES ESPACES DE CUISSON

(30) Priority: 17.01.2023 US 202363480193 P
(43) Date of publication of application: 26.11.2025
(73) Proprietor: Yissum Research Development Company of The Hebrew University of Jerusalem Ltd., 9139002 Jerusalem (IL); Savoreat Ltd., 7670104 Rehovot (IL)
(72) Inventor: SULTAN, Shai, 7681801 Ganey Tal (IL); JACOBI, Dor, Dvir (IL); SIN REUVEN, Yoni, 7661607 Rehovot (IL); BRASLAVSKY, Ido, 7407343 Ness Ziona (IL); SHOSEYOV, Oded, 6080410 Shoham (IL)
(74) Representative: Weickmann & Weickmann PartmbB
(86) International application number: PCT/IL2024/050063
(87) International publication number: WO 2024/154127

(56) References cited:
- WO-A1-2022/144884
- JP-A- H07 227 199
- JP-A- H07 232 807
- JP-B2- 3 178 899
- US-A- 1 621 234
- US-A- 5 546 848
- US-A1- 2019 298 104
- US-B2- 10 743 710

## Description

### RELATED APPLICATIONS

This application claims the benefit of priority to U.S. Provisional Patent Application No. 63/480,193, filed January 17, 2023, entitled "Cooking Apparatus".

### TECHNOLOGICAL FIELD

The present application relates to a cooking apparatus, and more specifically, but not exclusively, to a cooking apparatus configured within a robotic chef, and containing an integrated drive system for control of spacing and food delivery in multiple cooking spaces.

### BACKGROUND OF THE INVENTION

Among processed foods, hamburgers and other flat products such as pancakes, shrimp, or chicken nuggets, enjoy considerable popularity. Hamburgers and other flat foods are typically processed through a series of steps including heating, optionally flipping, and packaging. Typically, each of these steps is handled manually. Production of hamburgers and other flat food products exhibit a low degree of automation, and thus hamburger production lines are typically time consuming and require manual labor.

In order to render hamburger production more efficient and cost effective, while ensuring that the patties are fully cooked and while maintaining high sanitary conditions, automated systems for patty manufacturing and cooking are desired.

Recently, some robotic chefs have been developed for cooking and delivery of hamburgers or vegetarian hamburger-like patties. For example, U.S. Patent Publication 2023/0274603 discloses a robotic apparatus that separately heats a hamburger bun, heats a hamburger, and places the hamburger and bun within a box to vend to a consumer. International Patent Publication WO2022/144844, which is assigned to the same assignee as the present application, discloses a system for custom preparation of a hamburger or hamburger-like patty, including a cooking space defined between a bottom heating surface and a top heating surface, and a lift that is configured to raise and lower the top heating surface relative to the bottom heating surface. Other examples of robotic chefs are known from documents US 10 743 710 B2, US 2019/298104 A1.

### SUMMARY OF THE INVENTION

The above-referenced publications, and other disclosures in the context of robotic food preparation, generally teach preparation of a single patty at a time. In contrast to a human cook, who is able to use the same grill to prepare multiple hamburgers simultaneously, a typical prior art robotic chef is limited to preparing one hamburger at a time. This limitation has obvious drawbacks. Increasing throughput requires installation of multiple robotic chefs, which, in turn, requires significant capital and additional dedication of space.

In addition, typical prior art mechanisms for robotic chefs require (at least) two separate drive mechanisms - one (or more) for transporting raw food in and out of a cooking space, and a second one for controlling a height of the cooking space. The utilization of different drive mechanisms for different movements is understandable, but also comes at the expense of additional space.

The present disclosure teaches a system and a method for preparing and cooking patty-like products, such as hamburgers, hash browns, shrimp substitutes, or any other meat-based or vegetable-based patty-like food products. The system generally comprises a cooker which includes a pair of heater elements defining therebetween an axially controllable cooking space, and a food product dragger. The dragger is configured for displacing a prepared food product from the cooking space, after the food product has been formed and cooked, to a prepared food tray, through which the cooked product may be retrieved. The system is automatically operable through an integrated drive system that is configured for selectively controlling both the axial extent of the cooking space and the linear movement of the food product dragger.

The cooker generally comprises a pair of heaters, one of which is a bottom heater and the other a top heater. The two heaters are positioned to define an axially controllable cooking space which is configured to receive therein an "uncooked food item" or a raw food item and through heating surfaces provided on each of the heaters is further configured to cause flattening and cooking of the uncooked food item, transforming same into a "cooked food product" or a "prepared food item". A food product dragger (or, for short, a "dragger") is provided in the cooker for displacing the prepared or cooked food product from the cooking space to a prepared food tray. The operation of the cooker is controlled by a driving system that is associated with the cooker to selectively control the cooking space and the food product dragger.

In particularly advantageous embodiments, multiple cookers are arranged colinearly. A single, integrated driving system is configured to control the cooking space and food product dragger of all of the colinear cookers. Advantageously, this configuration enables maximal space saving, and allows for production of a large number of prepared food products in a relatively narrow space.

According to a first aspect, in particular, a cooker for preparing a food product is disclosed. The cooker includes a bottom heater and a top heater defining therebetween an axially controllable cooking space, the cooking space configured for receiving therein an uncooked food product and for cooking the food product therein. A prepared food tray is adjacent to the cooking space. A dragger has a dragging surface that is configured to displace the cooked food product from the cooking space to the prepared food tray. An integrated drive system is configured for controlling both an axial dimension of the cooking space and a horizontal displacement of the dragger. Advantageously, the integrated drive system obviates the need for a separate drive system for the axial and vertical dimensions.

Optionally, a bottom of the prepared food tray is coplanar with a cooking surface of the bottom heater. This configuration enables easy sliding of the prepared food product from the bottom heater to the prepared food tray. Optionally, the prepared food tray comprises a removable drawer, enabling easy access to the prepared food product following cooking.

Optionally, the dragger comprises a wiper that is slidably displaceable over a heating surface of one or both of the bottom heater and the top heater. The wiper may be used for cleaning the heating surfaces following cooking of the prepared food product. The wiper may be detachable from the dragger, to enable easy cleaning of the wiper. The wiper may have a width corresponding to a width of heating surfaces of the top and bottom heaters, to ensure that the wiper cleans the entirety of the heating surfaces.

In one particular implementation, the wiper is configured on a face of the dragger that is opposite the dragging surface. Movement of the dragger in a first horizontal direction pushes a prepared food item from the cooking space to the prepared food tray. Movement of the dragger in an opposite horizontal direction causes the wiper to wipe the heating surface of one or both of the bottom heater and top heater. Advantageously, the reverse movement of the dragger serves a dual function of cleaning the cooking space and preparing the dragger for subsequent delivery of a new uncooked food product. Optionally, a height of the wiper is greater than a height of the dragging surface. This configuration enables cleaning with the wiper when the cooking space is set to a cleaning height, without necessarily effecting a wiping movement when the cooking space is set at a greater height.

The integrated drive system includes: a belt drive; a cooking space shaft that is rotatable by the belt drive, and a cooking space clutch for selectively connecting and disconnecting the cooking space shaft from the belt drive; a dragger shaft that is rotatable by the belt drive, and a dragger clutch for selectively connecting and disconnecting the dragger shaft from the belt drive; and a controller for controlling operation of the belt drive and the clutches.

The clutches may be electromechanical clutches. Electromechanical clutches may be easily controlled, through operation of a controller, to selectively engage or disengage an electromagnet of each clutch.

Optionally, for both the cooking space clutches and the dragger clutches, when the clutches are not activated, rotation of the belt drive does not induce corresponding rotation of the shaft, and, when the clutches are activated, a magnetic connection is formed between the shaft and a gear that is rotated by the belt drive, such that rotation of the belt drive induces rotation of the shaft. When the clutches are activated, rotation of the belt drive in a first direction may cause rotation of the cooking space shaft and the dragger shaft in the same first direction, and rotation of the belt drive in the opposite direction causes rotation of the cooking space shaft and the dragger shaft in the same opposite direction.

The cooking space shaft may be part of a vertical actuator configured to axially displace the top heater while the bottom heater remains stationary. The vertical actuator may be configured to axially displace the top heater between a loading position at which the cooking space is maximal, a cooking position at which the cooking space corresponds to a desired height of the food product, and a cleaning position in which a wiper is configured to displace through the cooking space snugly between the top heater and bottom heater. The cooking space shaft may include a screw gear, and the top heater may be attached to a traveling nut. The screw gear may be configured within the traveling nut to form a screw jack, such that actuation of the belt causes vertical displacement of the top heater.

The dragger shaft may be integrated with a horizontal actuator configured to horizontally displace the dragger relative to the bottom heater, top heater, and prepared food tray. The horizontal actuator may be configured to displace the dragger between a loading position, in which the dragger extends external to the cooking space, an intermediate position in which the dragger is located within the cooking space, and an advanced position in which the dragger is located at least partially above the prepared food tray. The horizontal actuator may particularly include a dragger belt mechanically connected to the dragger shaft, and a dragger mount mechanically connected to the dragger belt and to the dragger, wherein actuation of the dragger belt causes corresponding displacement of the dragger mount.

In advantageous embodiments, the controller is configured to sequentially operate the direction of belt movement, the cooking space clutch, and the dragger clutch, so as to perform the following sequence of steps: retraction of the dragger to the loading position; advancement of the dragger from the loading position to the intermediate position to thereby load an uncooked food product into the cooking space; axial lowering of the top heater relative to the bottom heater to thereby press the uncooked food product; following cooking of the food product, axial raising of the top heater relative to the bottom heater; and horizontal displacement of the food product to a prepared food tray with the dragger. The belt movement is thus controlled in order to enable sequential operation of the cooking space and the dragger, proceeding from delivery of the raw food to the cooking space, cooking the raw food within the cooking space, and delivering of the cooked food product to the prepared food tray.

Multiple cookers may be arranged in an array. Each of the cookers in the array may include a separate bottom heater, top heater, prepared food tray, and dragger. The cookers in the array share a common drive system for selectively controlling an axial dimension of each cooking space and a horizontal displacement of each dragger. Advantageously, the common drive system is used for both axial and horizontal displacement, for all of the cookers in the array, thereby maximizing the space utilization of the array.

The common drive system includes: a belt drive; a plurality of cooking space shafts that are rotatable by the belt drive, and, for each cooking space shaft, a cooking space clutch for selectively connecting and disconnecting the cooking space shaft from the belt drive; a plurality of dragger shafts that are rotatable by the belt drive, and, for each dragger shaft, a dragger clutch for selectively connecting and disconnecting the dragger shaft from the belt drive; and a controller for controlling operation of the belt drive and the clutches. The clutches may be electromechanical clutches. For each shaft and clutch, when the clutch is not activated, rotation of the belt drive does not induce corresponding rotation of the shaft, and, when the clutch is activated, a magnetic connection is formed between the shaft and the clutches, such that rotation of the belt drive induces rotation of the shaft. When the clutches are activated, rotation of the belt drive in a first direction causes rotation of the cooking space shaft and the dragger shaft in the same first direction, and rotation of the belt drive in the opposite direction causes rotation of the cooking space shaft and the dragger shaft in the same opposite direction.

The cookers of the array may be aligned along an axis that is perpendicular to an axis of movement of each dragger. This alignment enables the respective shafts to be arranged colinearly.

According to a second aspect, a method of preparing a food product is disclosed. The method includes: loading an uncooked food product into a cooking space defined by a bottom heater and a top heater; axially lowering the top heater relative to the bottom heater to thereby press the uncooked food product; cooking the food product by applying heat to the bottom heater and top heater; axially raising the top heater relative to the bottom heater; and horizontally displacing the food product to a prepared food tray with a dragger. The axially lowering, axially raising, and horizontally displacing steps are performed through selective operation of an integrated drive system.

Optionally, the dragger further includes a wiper that is slidably displaceable over a heating surface of one or both of the bottom heater and the top heater. The wiper is configured on a face of the dragger that is opposite a dragging surface of the dragger. The method further includes: positioning the wiper between the top heater and bottom heater; axially lowering the top heater relative to the bottom heater to a wiping height; and horizontally moving the dragger in an opposite horizontal direction away from the prepared food tray, to thereby displace the wiper over at least one of the heating surface of the bottom heater and the top heater.

Optionally, the method further includes performing the inserting step by horizontally displacing the uncooked food product into the cooking space with the dragger.

The integrated drive system may include a belt drive; a plurality of cooking space shafts that are rotatable by the belt drive, and, for each cooking space shaft, a cooking space clutch for selectively connecting and disconnecting the cooking space shaft from the belt drive; a plurality of dragger shafts that are rotatable by the belt drive, and, for each dragger shaft, a dragger clutch for selectively connecting and disconnecting the dragger shaft from the belt drive; and a controller for controlling operation of the belt drive and the clutches. In such embodiments, the axially lowering and axially raising steps further include operating the cooking space shaft with the belt drive while the dragger clutch is disengaged; and the horizontally displacing step includes operating the dragger shaft with the belt drive while the cooking space shaft is disengaged.

The method may further include preparing multiple food products simultaneously in an array of cookers. Each cooker comprises a separate bottom heater, top heater, prepared food tray, and dragger. The cookers in the array share a common drive system for selectively controlling an axial dimension of each cooking space and a horizontal displacement of each dragger, wherein the common drive system comprises a belt drive; a plurality of cooking space shafts that are rotatable by the belt drive, each cooking space shaft configured to control a height of one cooking space, and, for each cooking space shaft, a cooking space clutch for selectively connecting and disconnecting the cooking space shaft from the belt drive; a plurality of dragger shafts that are rotatable by the belt drive, each dragger shaft configured to control a horizontal displacement of a single dragger, and, for each dragger shaft, a dragger clutch for selectively connecting and disconnecting the dragger shaft from the belt drive. The method further comprises controlling operation of the belt drive and the clutches, such that, for each cooker, the belt drive rotates the cooking space shaft and dragger shaft at different times.

According to a third aspect, an integrated drive system for axial and linear movement is disclosed. The integrated drive system includes a belt drive; an axial movement shaft that is rotatable by the belt drive, and an axial movement clutch for selectively connecting and disconnecting the axial movement shaft from the belt drive; a linear movement shaft that is rotatable by the belt drive, and a linear movement clutch for selectively connecting and disconnecting the linear movement shaft from the belt drive; and a controller for controlling operation of the belt drive and the clutches.

The clutches may be electromechanical clutches. When the clutches are not activated, rotation of the belt drive does not induce corresponding rotation of the shaft, and, when the clutches are activated, a magnetic connection is formed between the shaft and a gear that is rotated by the belt drive, such that rotation of the belt drive induces rotation of the shaft.

Optionally, when the clutches are activated, rotation of the belt drive in a first direction causes rotation of the axial movement shaft and the linear movement shaft in the same first direction, and rotation of the belt drive in the opposite direction causes rotation of the axial movement shaft and the linear movement shaft in the same opposite direction.

The axial movement shaft may include a screw gear. The screw gear may be configured within a traveling nut to form a screw jack, such that actuation of the belt causes vertical displacement of the traveling nut, and anything that is connected to the traveling nut.

The linear movement shaft may be integrated with a linear actuator. The linear actuator may include a linear actuator belt mechanically connected to the linear movement shaft, and a mount mechanically connected to the linear actuator belt, so that actuation of the linear actuator belt causes corresponding displacement of the mount.

The integrated drive system may include an array of pairs of axial and linear movement shafts. The array may include a plurality of axial movement shafts that are rotatable by the belt drive, and, for each axial movement shaft, an axial movement clutch for selectively connecting and disconnecting the axial movement shaft from the belt drive; a plurality of linear movement shafts that are rotatable by the belt drive, and, for each linear movement shaft, a linear movement clutch for selectively connecting and disconnecting the dragger shaft from the belt drive. The controller is configured to control operation of the belt drive and the clutches, such that, for each pair of an axial movement shaft and a linear movement shaft, the belt drive rotates the axial movement shaft and linear movement shaft at different times.

### BRIEF DESCRIPTION OF THE DRAWINGS

**FIG. 1A** depicts a front upper perspective view of a cooker system, according to embodiments of the present disclosure;
**FIG. 1B** depicts a rear upper perspective view of the cooker system of **FIG. 1A****,** according to embodiments of the present disclosure;
**FIG. 2** depicts a single cooker of the cooker system of **FIGS. 1A** and **1B****,** according to embodiments of the present disclosure;
**FIG. 3** is a side view of the dragger and cooking space of a single cooker, according to embodiments of the present disclosure;
**FIG. 4A** illustrates the integrated drive system of the cooker system, according to embodiments of the present disclosure;
**FIG. 4B** is a close up view of a clutch of the integrated drive system;
**FIGS. 5A-5C** illustrate sequential movement of the dragger and the cooking space during preparation of a food item, according to embodiments of the present disclosure;
**FIG. 6** illustrates a lift tray for delivering a raw food product with the cooker system, according to embodiments of the present disclosure; and
**FIG. 7** illustrates a robotic chef including the cooker system, according to embodiments of the present disclosure.

### DETAILED DESCRIPTION OF EMBODIMENTS

The present application relates to a cooking apparatus, and more specifically, but not exclusively, to a cooking apparatus configured for use within a robotic chef, and containing an integrated drive system for control of spacing and food delivery in multiple cooking spaces.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

As used in the present disclosure, the terms "cooker" and "cooker mechanism" are used interchangeably and refer to a mechanism for preparing a food product. The cooker comprises a bottom heater and a top heater defining therebetween an axially controllable cooking space configured to receive therein an uncooked food item. The cooker further includes a food product dragger that is configured for displacing a cooked food product from the cooking space to a prepared food tray. A driving system selectively controls the cooking space and the food product dragger.

As disclosed herein, a cooker mechanism is structured and operable to receive, on a top surface of the bottom heater, an uncooked food item which is to be shaped and cooked. The uncooked food item may be a patty of any composition deposited or retracted directly or indirectly onto the top surface of the bottom heater. In some configurations, the uncooked food item is received from a deposition unit (such as a platform) that is external to the cooker. Once the uncooked item is positioned on the top surface of the bottom heater, the top heater is lowered along a vertical axis to press the uncooked product into a disc or a flat shape. While pressing, the food product is heated and cooked. Once the top heater transitions back to its original loading position, the shaped and cooked food item is pushed by the food dragger from the bottom heater to a cooked food tray from which the cooked food product may be retrieved by a user or an operator of the cooker.

As used in the present disclosure, a "cooking system" or a "cooking unit" is a system including more than one cooker, in which all the cookers share the same drive system for controlling the respective top heaters and food draggers.

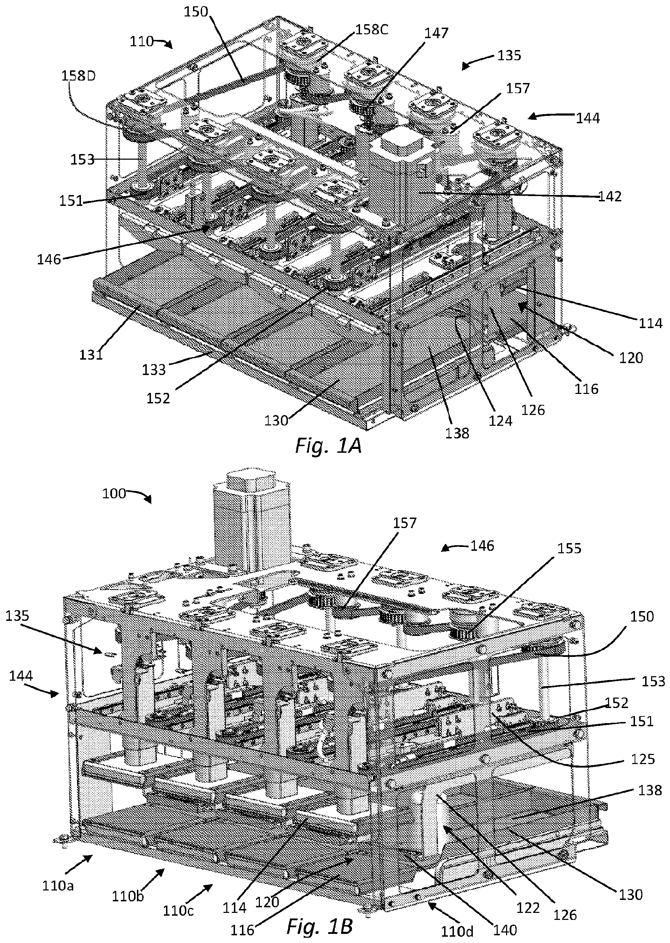

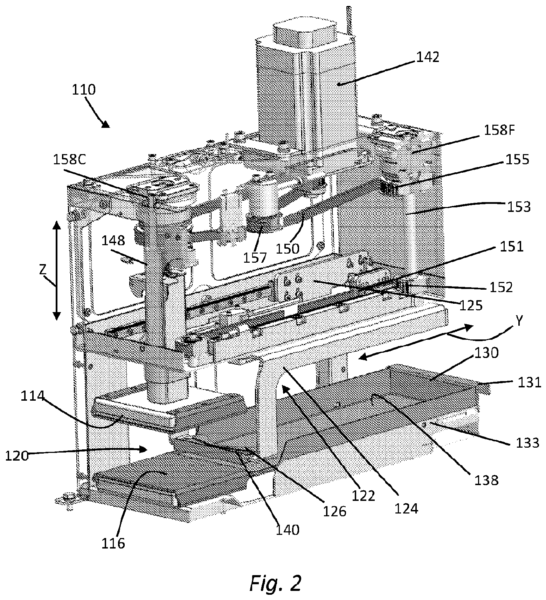

Referring now to **FIGS. 1A, 1B****,** and **2****,** cooking system 100 includes one or more cookers 110a, 110b, 110c, 110d. The cookers 110a-110d are arranged in a collinear array. Each cooker 110 includes top heater 114 and bottom heater 116, which define therebetween a cooking space 120. Each of the heaters may be heated to a temperature of between 120 °C and 200 °C to cause cooking and/or grilling of the uncooked food item. Depending on the composition of the uncooked food product, the amount of the product placed on the bottom heater 116 and the degree of cooking that is desired, the temperature of the bottom heater 116 and top heater 114 may be varied. The two heaters may or may not maintain the same temperatures.

The heating surface of one or both of the bottom heater 116 and top heater 114 may be flat or patterned. In some embodiments, one or both of the top heater 114 and the bottom heater 116 is fitted with a detachable heating plate, which may be coated with a food-safe, dirt-repellent, non-stick, dishwasher-safe, and/or anti-scratch material.

In some embodiments, one or both of the bottom heater 116 and the top heater 114 are configured with one or more temperature sensors. The temperature sensors may be configured for measuring the external temperature of the food item or an internal temperature thereof. The temperature sensors may be in a form of thermocouples, resistance temperature detectors (RTDs), thermistors, or semiconductor based integrated circuits (ICs).

One or both of the bottom heater 116 and the top heater 114 is axially displaceable to change the distance therebetween; namely, to change the height of cooking space 120. In the illustrated embodiments, the top heater 114 is axially displaceable with respect to the bottom heater 116 along a vertical axis Z, i.e., wherein the length of the axis Z defines the distance between the bottom heater 116 and the top heater 114 or the height of the cooking space 120. The bottom heater 116 is stationary or fixed in position. Theoretically, it is possible to arrange the cooker 110 so that the top heater 114 is fixed and the bottom heater 116 moves with respect to the top heater 114.

The maximum distance between a top surface of the bottom heater 116 (namely a surface facing upwards) and a bottom surface of the top heater 114 (namely a surface facing downwards) defines the maximum height of the cooking space 120. When the mechanism is in a non-operable or idle state, each of the heaters may be positioned at a loading position. In the loading position, the cooking space 120 is at a maximal height, to permit loading of an uncooked food item into the cooking space 120. After insertion of the uncooked food item, when one of the heaters is fixed, e.g., the bottom heater 116, the other heater, e.g., top heater 114, may move along the vertical axis Z in a direction of the fixed heater. The top heater 114 may be lowered to a suitable height, corresponding to the thickness of the uncooked food item. The thinner the food item is, the closer the distance or gap between the surfaces of the heaters may be.

The distance the moving heater travels in a direction of the fixed heater, the temperature of each of the heaters, the contact time period between the heaters and the food item as well as any change in pressure and/or temperature applied to the food item defines a cooking profile. The cooking profile may differ each time the cooker is used.

To accurately adapt the pressure and temperature conditions to the particular food item, the cooker 110 may be provided with a temperature sensor, as discussed above, which is configured to measure a temperature of the food item throughout the cooking session. Based on such thermal measurements, the cooking temperature and/or the contact between the food item and the heaters may be varied to cause more effective cooking or to cause a slower or a limited level of cooking.

The cooker mechanism 100 is equipped with a controller (not shown). The controller is configured to receive data signals corresponding with parameters of one or more of the cooking space drive mechanisms and the dragger drive mechanism (both of which will be described further herein), weight of a food item placed over the bottom heater 116, temperature of the top heater 114 and the bottom heater 116, and optionally temperature of the product undergoing cooking. The controller is set to generate command signals to control operation of one or more of the cooking space drive mechanisms, the food item drive mechanism, temperature of the bottom heater and of the top heater.

Still referring to **FIGS. 1A, 1B****,** and **2****,** each cooker 110 further includes a food dragger mechanism (hereinafter, "dragger") 122 and a prepared food tray 130. Dragger 122 includes a dragging surface 124, a mount 125, and arms 126. The dragging surface 124 is sized and shaped to push a food item from the cooking space 120 to the prepared food tray 130. The dragging surface 124 may also be configured in a particular three-dimensional shape, such as a semicircle, in order to shape the food item prior to cooking. The mount 125 is attached to a drive system, whose function will be described further herein. Mount 125 is also attached to two parallel arms 126. The arms 126 are sized and dimensioned such that, on their lower ends, the arms 126 extend around the width of the top heater 114, the bottom heater 116, and the prepared food tray 130. On the upper ends of the arms 126, the mount 125 connects to a drive module for the dragger 122, which, in turn, is powered by the drive system 135 of the cooker.

As seen best in **FIG. 2****,** the prepared food tray 130 includes a removable drawer 131 that is slidably removable from base 133. Drawer 131 includes a prepared food receiving surface 138. Thus, when a prepared food is deposited onto surface 138, a user may open drawer 131 and remove the prepared food therefrom.

In the illustrated embodiment, the heating surface of the bottom heater 116 is coplanar with the surface 138 of the prepared food tray. Advantageously, the dragger 122 is thus able to push prepared food directly from bottom heater 116 to the drawer 131. This allows for smooth and uninterrupted placing and displacing of the food item from the surface of the bottom heater 116 onto the food tray 130. Furthermore, the prepared food tray 130 may be sized and shaped to accommodate one or more prepared food items positioned in a row. The displacement of a cooked food item from the cooking space onto the food tray may be such that any further prepared food item slidingly displaces a previously prepared food item. For example, a first cooked food item may be dragged onto the tray 130, and a second food item is prepared (shaped and cooked as disclosed) while the first cooked food item remains in the tray 130, such that when the dragger 122 pushes the second cooked food item onto the tray 130, the second food item displaces the first cooked food item.

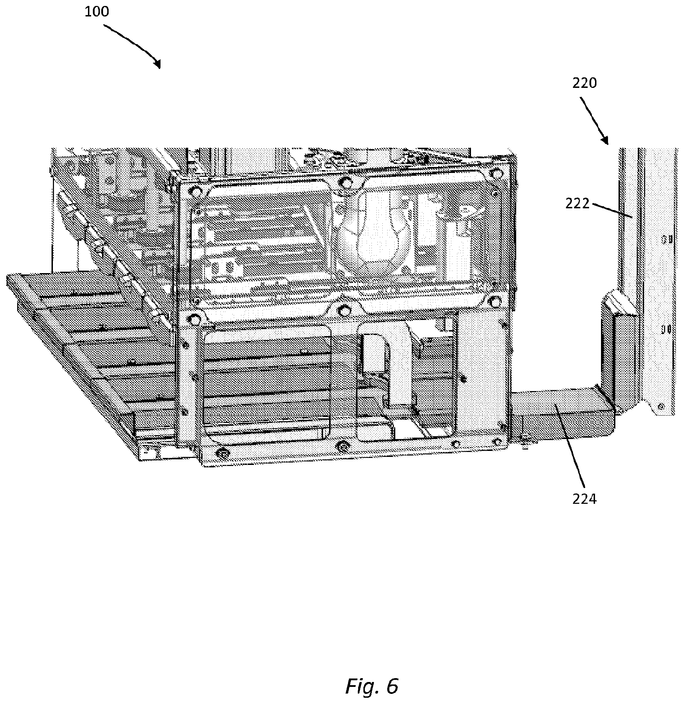

Optionally, the dragger 122 includes a wiper 140 on an opposite side of the dragging surface 124. Movement of the dragger 122 in a first horizontal direction pushes uncooked food from platform 224 (shown in **FIG. 6**) to the cooking space 120 and pushes a prepared food item from the cooking space 120 to the prepared food tray 130. Movement of the dragger 122 in an opposite horizontal direction causes the wiper 140 to wipe the heating surface of one or both of the bottom heater 116 and top heater 114. The wiper is slidably displaceable over the heating surfaces of the bottom heater 116 and/or the top heater 114, and is used to clear oils and other residues off of those surfaces following cooking of a food item.

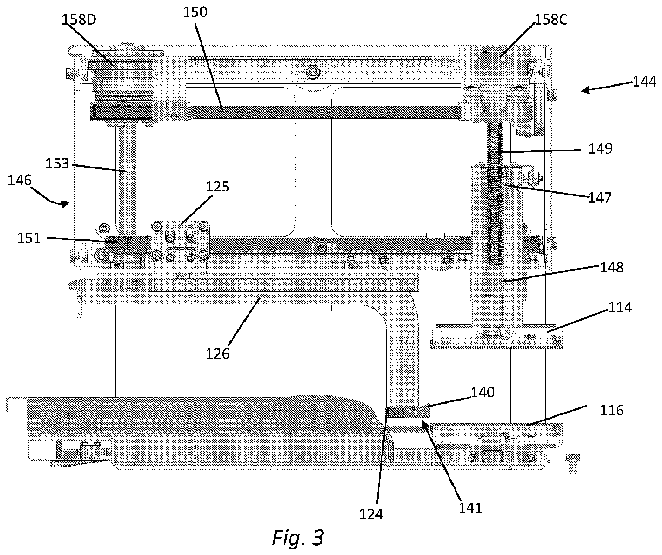

The dragging surface 124 and the wiper 140 may be made of a single molded piece, e.g., of rubber or silicon. The wiper 140 may be detachable from the dragger 122, to enable easy cleaning of the wiper 140. The width of the wiper 140 may be equivalent to the width of heating surfaces of the top and bottom heaters, in order to ensure that the wiper 140 cleans the entirety of those heating surfaces. In a preferred embodiment, and as seen best in **FIG. 3****,** the height of the wiper 140 is greater than the height of the dragging surface 124. In addition, the wiper 140 may include a groove 141 on an underside thereof, as seen in **FIG. 3****.** Advantageously, the flexibility enabled by the groove 141, in combination with the height differential, enables the top heater 114 to lower over the wiper 140 and to "clamp" onto the wiper 140. This clamping enables the wiper 140 to snugly displace over the top and lower heating surfaces.

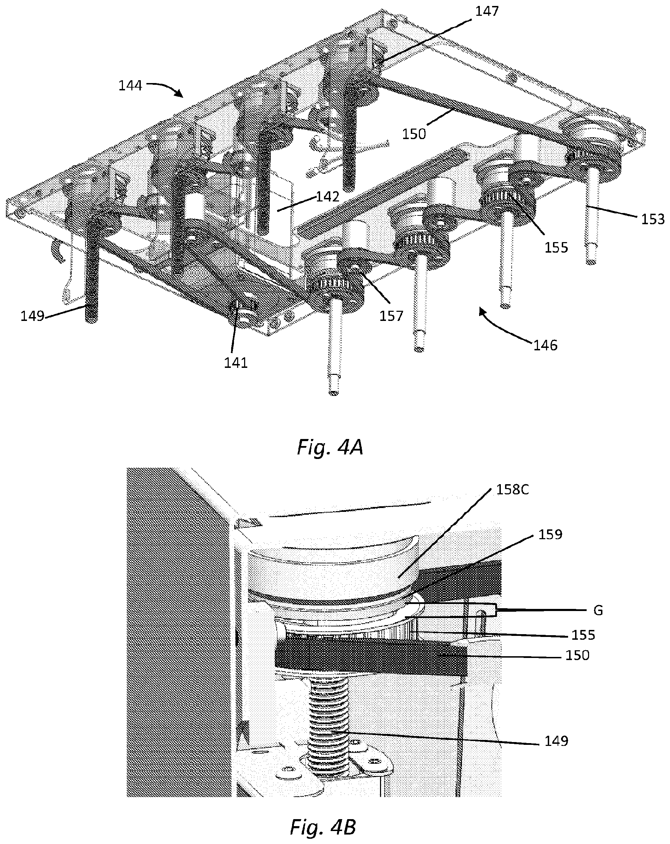

As mentioned above, cooking system 100 includes an integrated drive system 135 for controlling both an axial dimension of the cooking space 120 and a horizontal displacement of the dragger 122. The drive system 135 further includes cooking space drive subsystem 144 and dragger drive subsystem 146. The drive system 135 is illustrated, in various views, in **FIGS. 1A, 1B****,** **2****,** **3****,** **4A,** and **4B****.** The drive system includes a drive belt 150, which is powered by motor 142. The motor 142 may be, for example, a stepper motor or a servo motor. The motor 142 may receive instructions from a controller (not shown) to advance the belt 150 in a forward direction or a backward direction (e.g., clockwise or counterclockwise in the view of **FIG. 4A**).

Belt 150 advances in a loop, starting from motor 142 to motor gear 141, and then sequentially to gears 155 and tension elements 157. When, as in the illustrated embodiments, there are multiple cookers 110 in cooker system 100, the belt 150 first advances through all the gears 155 associated with the cooking space drive 144, and then advances through all the gears associated with dragger drive 146 (or vice versa, depending on the direction of travel of the belt 150).

Each of the gears 155 includes a clutch 158, for selectively connecting and disconnecting shafts from the belt drive 150. The clutches associated with the cooking space drive 144 ("cooking space clutches") are designated with reference numeral 158C, and the clutches associated with the dragger drive 146 ("dragger clutches") are designated with reference numeral 158D. In a preferred embodiment, clutches 158 are electromagnetic clutches. The electromagnetic clutches 158 include magnets 159 (shown in **FIG. 4B**) which are activated by the controller. When the clutches are disengaged, the electromagnets are off, and magnets 159 do not exert a magnetic attraction. In this state, a gap G (shown in **FIG. 4B**) exists between the magnets 159 and the gears 155. As a result, rotation of the gears 155 by the belt 150 does not affect the magnets 159 or anything mechanically connected thereto. By contrast, when the electromagnets are activated, a magnetic attraction is formed between magnets 159 and gears 155. As a result, the magnet 159 and the gear 155 are mechanically connected, and rotation of the gears 155 causes corresponding rotation of the magnet 159 and everything mechanically connected thereto.

In the cooking space drive 144, the electromagnets 159 are mechanically connected to a cooking space shaft. The cooking space shaft is part of a vertical actuator or "jack mechanism" for raising and lowering the top cooker 114. In the illustrated embodiment, the jack mechanism is a screw jack. The cooking space shaft is screw gear 149, which rotates within traveling nut 147, as best seen in **FIG. 3****.** Traveling nut 147 is attached to housing 148, to which top heater 114 is attached. As a result, rotation of the screw gear 149 in a first direction causes the housing 148 and top heater 114 to rise, and rotation of the screw gear 149 in a second direction causes the housing 148 and top heater 114 to descend.

As may be readily understood by those of skill in the art, alternative jacks or vertical actuators may be contemplated as well. For example, the cooking space drive 144 may include a hydraulic jack.

The cooking space drive 144 is configured for axially displacing the top heater 114 to any desired height. In particular, the top heater 114 may be displaced between a loading position at which the cooking space 120 is maximal, a cooking position at which the cooking space 120 corresponds with the height or thickness of the prepared food item, and a cleaning position at which the wiper 140 displaces through the cooking space 120, snugly between the top heater 114 and the bottom heater 116, for wiping off or removing liquid or solid or fatty residual materials left from a cooking session.

In the dragger drive 146, the electromagnets 159 are mechanically connected to dragger shafts 153. Dragger shafts 153 are connected, at their other end, to a horizontal actuator for the dragger 122. This horizontal actuator includes spur gears 152, which, in turn, are configured to advance dragger belt 151. Thus, when the electromagnet 159 is activated, rotation of belt 150 in a given direction (e.g., clockwise) causes rotation of the dragger belt 151 in the same (clockwise) direction. In addition, as seen in **FIG. 3****,** the arms 126 of dragger 122 are connected, via mount 125, to the dragger belt 151. In sum, when the clutch 158D is engaged, rotation of belt 150 causes rotation of shaft 153, which causes rotation of dragger belt 151, which causes displacement of the dragger mount 125 which causes advancement or retraction of dragger 122. The horizontal actuator is configured to displace the dragger 122 between a loading position, in which the dragger 122 extends external to and behind the cooking space 120, an intermediate position in which the dragger is located within the cooking space 120, and an advanced position in which the dragger 122 is located at least partially above the prepared food tray 130. The uses of these different horizontal positions will be discussed further herein.

As may be readily understood from the foregoing discussion, the drive system 135 may be utilized for achieving movements of the top heater 114 and the dragger 122 at the same time. However, these coinciding movements are necessarily limited based on the direction of movement of belt 150. When clutches 158C, 158D are activated, rotation of the belt drive 150 in a first direction causes rotation of the cooking space shaft 149 and the dragger shaft 153 in the same first direction, and rotation of the belt drive 150 in the opposite direction causes rotation of the cooking space shaft 149 and the dragger shaft 153 in the same opposite direction. For example, clockwise movement of belt 150 may cause downward movement of a top heater 114 and forward movement of dragger 122. Similarly, counterclockwise movement of belt 150 may cause upward movement of top heater 114 and backwards movement of dragger 122. Thus, it is possible for the top heater 114 and dragger 122 to move simultaneously, but only in one combination of movements. More commonly, for purposes of convenience and ease of coordination, the top heater 114 and dragger 122 may be configured to move at different times, as in the examples described further herein.

It may also be readily understood based on the foregoing discussion that, when the cooker system 100 includes multiple cookers 110 arranged colinearly (as in the system 100 depicted in **FIGS. 1A, 1B****,** and **2**), that the drive system 135 may be engaged to implement simultaneous movements of top heaters 114 and draggers 122 in each of the cookers 110. Again, the only limitation is that belt 150 may rotate only one direction at a time. Thus, for example, if all the screw gears 149 are threaded in the same way, it is possible to lower the top heaters 114 in cookers 110a and 110b at the same time, because the lowering of both top heaters 114 is performed by rotating the belt in the same direction. However, it is not possible to lower a top heater 114 of cooker 110a while raising the top heater 114 of cooker 110b, because these movements would require two opposing movements of the belt 150. The same analysis applies with respect to movement of the draggers 122 forward or backward at the same time as lowering or raising the top heaters 114.

On the flipside, the disclosed drive system 135 enables significant space savings and economies of scale. The same drive belt 150 is able to cause both vertical movement of the top heater 114 and horizontal movement of the dragger 122. Furthermore, the same drive belt 150 may be used to actuate multiple cookers 110 in an array, in which the cookers 110 are aligned along an axis that is perpendicular to an axis of movement of each dragger 122. In the illustrated embodiment, there are four cookers 110 in the array; however, as is apparent, there is no maximum in the number of cookers 110 that could be included in the array. The disclosed drive system 135 thus enables achievement of a high throughput of hamburgers or patties, in an automated fashion, in a relatively small space.

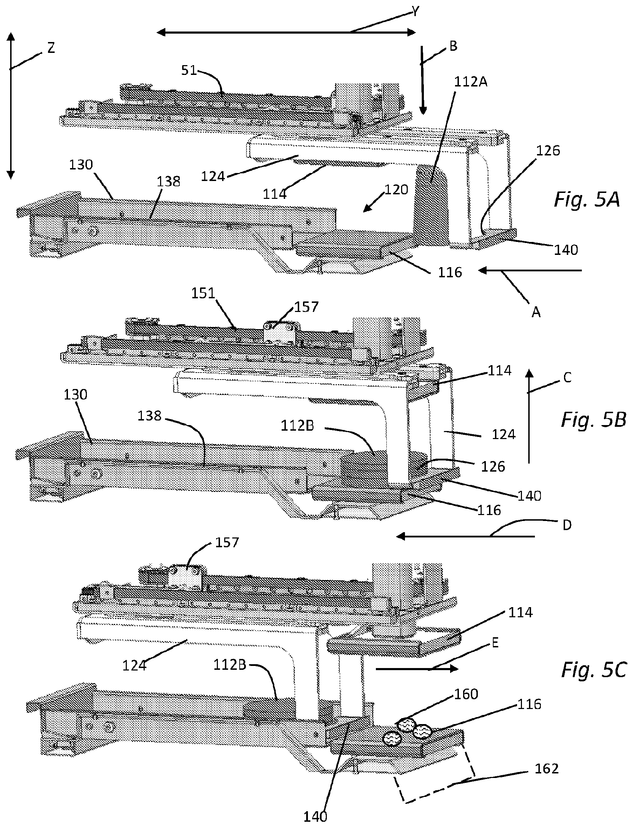

**FIGS. 5A-5C** and **FIG. 6** illustrate a process of operation of a cooker 110, according to embodiments of the present disclosure. The process involves sequential operation of the drive belt and the clutches, with the controller, so as to generate a specific sequence of movements in both the top cooker 114 and in the dragger 122. These movements are effectuated in the Y axis (for the dragger 122) and in the Z axis (for the top cooker 114). These movements include: retraction of the dragger 122 to the loading position; advancement of the dragger 122 from the loading position to the intermediate position to thereby load an uncooked food product into the cooking space 120; axial lowering of the top heater 114 relative to the bottom heater 116 to thereby press the uncooked food product; following cooking of the food product, axial raising of the top heater 114 relative to the bottom heater 116; and horizontal displacement of the food product to the prepared food tray 130 with the dragger 122.

In the view of **FIG. 5A****,** an uncooked patty 112A is present behind the cooking space 120. The dragger 122 is in a raw food item "loading position," in which the dragger surface 124 extends outside the cooking space 120.

For purposes of clarity, the platform on which the patty 112A is resting is not shown in **FIG. 5A****.** One possible embodiment of such a platform is illustrated in **FIG. 6****.** In **FIG. 6****,** platform 224 is attached to lift 222. The platform 224 and lift 222 are part of a delivery system 220, the remaining components of which are not shown here, for bringing raw ingredients from an ingredient storage module to the cooker array. Platform 224 may be provided with a weight measuring unit, such as a load cell, to determine weight of an uncooked food item placed thereover. The measured weight of the uncooked food item may be used to modify a cooking profile. As may be seen in **FIG. 6****,** the platform 224 may be approximately the same width as the bottom heater 116 and as the dragging surface 124. In addition, the horizontal extent of arms 126 enables the dragging surface 124 to be oriented behind the uncooked food 112A and platform 224, so as to enable the dragger 122 to move uncooked food 112A from the platform 224 to the bottom heater 116.

Still referring to **FIG. 5A****,** following delivery of the uncooked food 112A to the space between the dragger 122 and the cooking space 120, the drive system 135 actuates the dragger 122 to push the uncooked food 112A in the direction of arrow "A," to the cooking space 120. The cross-sectional shape of the dragger 122 (e.g., semicircular) may also impart a shape to the uncooked food 112A. At this point, the top heater 114 is in the loading position, with maximal height between the top heater 114 and bottom heater 116. The drive system 135 actuates the top heater 114, to lower the top heater 114 in the direction of arrow "B." The top heater 114 is lowered to a cooking position, at which it is contacting, or even compressing, the uncooked food 112A. The height of the cooking space 120 thus corresponds to the height of the food item. Heat is applied to the food item at both the top heater 114 and the bottom heater 116 to thereby cook the food item.

Referring now to **FIG. 5B****,** the cooker 110 has finished cooking the food item, which is now designated with reference numeral 112B. The controller operates the drive system 135 to cause the top heater 114 to rise in the direction of arrow C. The controller then operates the drive system 135 to cause the dragger 122 to move in the direction of arrow "D," thereby pushing the cooked food item 112B from the bottom heater 116 to the prepared food tray 130.

Referring now to **FIG. 5C****,** the cooked food item 112B is now on the tray 130, waiting for the user to retrieve it. At this point, oil and other food residue 160 remains on the bottom heater 116. In addition, oil may be adhered to the cooking surface of the top heater 114. In order to remove the oil 160 from the top heater 114 and bottom heater 116, the wiper 140 is passed through the top heater 114 and the bottom heater 116. Specifically, the drive system 135 is operated to drive the dragger 122 backwards, in the direction of arrow E, until the wiper 140 is configured over the edge of bottom heater 116. The drive system 135 then operates to lower the top heater 114 to a cleaning position, in which the gap between the top heater 114 and bottom heater 116 is such that the wiper 140 is able to displace through the cooking space 120 snugly between the bottom heater 116 and top heater 114, thereby guiding residue 160 off of the cooking surfaces and into oil tray 162. The cooker 110 is now in position to receive a new uncooked food item 112A.

This method of operation described in **FIGS. 5A-5C** with reference to a single cooker may be utilized to prepare multiple food products simultaneously in an array of cookers 110. Each cooker 110 comprises a separate bottom heater 116, top heater 114, prepared food tray 130, and dragger 122, and wherein the cookers 110 in the array share a common drive system 135 for selectively controlling an axial dimension of each cooking space 120 and a horizontal displacement of each dragger 120, wherein the common drive system comprises a belt drive 150. A plurality of cooking space shafts 149 are rotatable by the belt drive 150, each cooking space shaft 149 configured to control a height of one cooking space 120. For each cooking space shaft 149, a cooking space clutch 158C is configured for selectively connecting and disconnecting the cooking space shaft 158C from the belt drive 150. A plurality of dragger shafts 153 are rotatable by the belt drive 150. Each dragger shaft 153 is configured to control a horizontal displacement of a single dragger 122. For each dragger shaft 153, a dragger clutch 158D is configured for selectively connecting and disconnecting the dragger shaft 153 from the belt drive 150. The method includes operation of the belt drive 150 and the clutches 158C, 158D, such that, for each cooker 110, the belt drive 150 rotates the cooking space shaft 149 and dragger shaft 153 at different times.

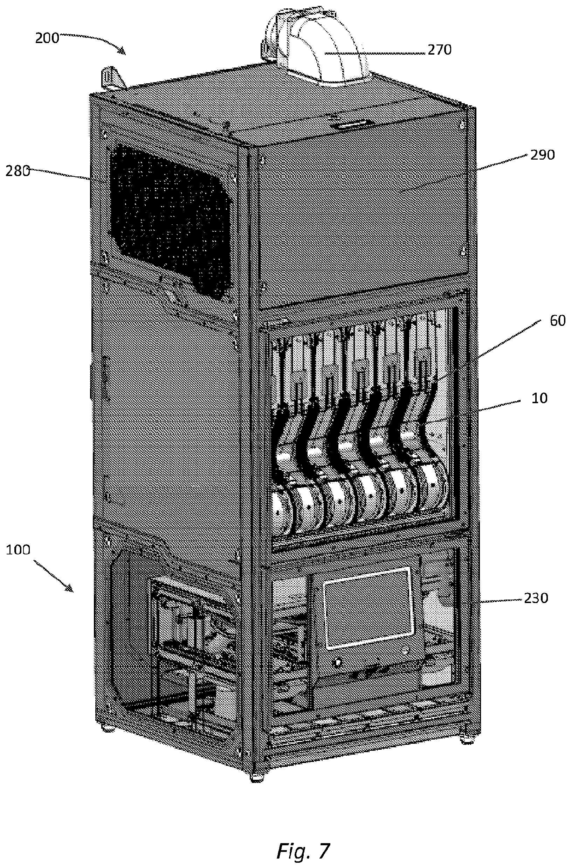

**FIG. 7** illustrates an embodiment of robotic chef 200 that may incorporate cooker system 100. The robotic chef 200 includes other modules and stations for food preparation and proper functioning, including a feeder unit 60 including individual feeders 10 for storing and delivering raw ingredients, a cooling system 280, an electrical box 290, a chimney 270, and an input interface 230. That said, the cooking system 100 described herein may be incorporated into various robotic chefs having different configurations, or various other types of machines.

In addition, the drive system 135 described herein may be implemented independently of the cooking system 100, and incorporated into any system for which it is desired to implement axial movement of one element and linear movement of a second element. In such systems, what was described herein as the "cooking space drive" may be described more generally as an "axial drive," including axial movement shafts and axial movement clutches, etc., and what was described as the "dragger drive" may be described more generally as a "linear drive," including linear movement shafts, linear movement clutches, and a linear actuation belt corresponding to the dragger belt. The drive system may include an array of paired axial movement shafts and linear movement shafts, and the controller may be configured to control operation of the belts and clutches such that, for any given pair, only one type of shaft (axial or linear) is rotated at any given time.

## Claims

1. A cooker (110) for preparing a food product, comprising:
a bottom heater (116) and a top heater (114) defining therebetween an axially controllable cooking space (120), the cooking space (120) configured for receiving therein an uncooked food product and for cooking the food product therein;
a prepared food tray (130) adjacent to the cooking space (120);
a dragger (122) with a dragging surface (124) that is configured to displace the cooked food product from the cooking space (120) to the prepared food tray (130);
and an integrated drive system (135) for controlling both an axial dimension of the cooking space (120) and a horizontal displacement of the dragger (122),
**characterized in that**:
the integrated drive system (135) comprises:
a belt drive (150);
a cooking space shaft (149) that is rotatable by the belt drive (150), and a cooking space clutch (158C) for selectively connecting and disconnecting the cooking space shaft (149) from the belt drive (150);
a dragger shaft (153) that is rotatable by the belt drive (150), and a dragger clutch (158D) for selectively connecting and disconnecting the dragger shaft (153) from the belt drive (150); and
a controller for controlling operation of the belt drive (150) and the clutches (158).

2. The cooker (110) of claim 1, wherein the dragger (122) comprises a wiper (140) that is slidably displaceable over a heating surface of one or both of the bottom heater (116) and the top heater (114), and preferably, wherein the wiper (140) is configured on a face of the dragger (122) that is opposite the dragging surface (124), such that movement of the dragger (122) in a first horizontal direction pushes a prepared food item from the cooking space (120) to the prepared food tray (130), and movement of the dragger (122) in an opposite horizontal direction causes the wiper (140) to wipe the heating surface of one or both of the bottom heater (116) and top heater (114), and more preferably, wherein a height of the wiper (140) is greater than a height of the dragging surface (124).

3. The cooker (110) of claim 1, wherein the clutches (158) are electromechanical clutches (158).

4. The cooker (110) of claim 3, wherein, when the clutches (158) are not activated, rotation of the belt drive (150) does not induce corresponding rotation of the shaft (149, 153), and, when the clutches (158) are activated, a magnetic connection is formed between the shaft (149, 153) and a gear (155) that is rotated by the belt drive (150), such that rotation of the belt drive (150) induces rotation of the shaft (149, 153).

5. The cooker (110) of claim 3 or 4, wherein, when the clutches (158) are activated, rotation of the belt drive (150) in a first direction causes rotation of the cooking space shaft (149) and the dragger shaft (153) in the same first direction, and rotation of the belt drive (150) in the opposite direction causes rotation of the cooking space shaft (149) and the dragger shaft (153) in the same opposite direction.

6. The cooker (110) of any of claims 3 to 5, wherein the cooking space shaft (149) is part of a vertical actuator configured to axially displace the top heater (114) while the bottom heater (116) remains stationary, and preferably, wherein the vertical actuator is configured to axially displace the top heater (114) between a loading position at which the cooking space (120) is maximal, a cooking position at which the cooking space (120) corresponds to a desired height of the food product, and a cleaning position in which a wiper (140) is configured to displace through the cooking space (120) snugly between the top heater (114) and bottom heater (116).

7. The cooker (110) of claim 6, wherein the cooking space shaft (149) comprises a screw gear (149), and wherein the top heater (114) is attached to a traveling nut (147), wherein the screw gear (149) is configured within the traveling nut (147) to form a screw jack, such that actuation of the belt (150) causes vertical displacement of the top heater (114).

8. The cooker (110) of any of the preceding claims, wherein the dragger shaft (153) is integrated with a horizontal actuator configured to horizontally displace the dragger (122) relative to the bottom heater (116), top heater (114), and prepared food tray (130), and preferably, wherein the horizontal actuator is configured to displace the dragger (122) between a loading position, in which the dragger (122) extends external to the cooking space (120), an intermediate position in which the dragger (122) is located within the cooking space (120), and an advanced position in which the dragger (122) is located at least partially above the prepared food tray (130).

9. The cooker (110) of claim 8, wherein the horizontal actuator comprises a dragger belt (151) mechanically connected to the dragger shaft (153), and a dragger mount (125) mechanically connected to the dragger belt (151) and to the dragger (122), wherein actuation of the dragger belt (151) causes corresponding displacement of the dragger mount (125).

10. The cooker (110) of any of claims 8 to 9, wherein the controller is configured to sequentially operate the direction of belt (150) movement, the cooking space clutch (158C), and the dragger clutch (158D), so as to perform the following sequence of steps:
retraction of the dragger (122) to the loading position;
advancement of the dragger (122) from the loading position to the intermediate position to thereby load an uncooked food product into the cooking space (120);
axial lowering of the top heater (114) relative to the bottom heater (116) to thereby press the uncooked food product;
following cooking of the food product, axial raising of the top heater (114) relative to the bottom heater (116);
and horizontal displacement of the food product to a prepared food tray (130) with the dragger (122).

11. An array of the cookers (110a-d) of any of claims 1 to 10, wherein each of the cookers (110a-d) in the array comprises a separate bottom heater (116), top heater (114), prepared food tray (130), and dragger (122), and wherein the cookers (110a-d) in the array share a common drive system (135) for selectively controlling an axial dimension of each cooking space (120) and a horizontal displacement of each dragger (122).

12. The array of claim 11, wherein the common drive system comprises:
a belt drive (150);
a plurality of cooking space shafts (149) that are rotatable by the belt drive (150), and, for each cooking space shaft (149), a cooking space clutch (158C) for selectively connecting and disconnecting the cooking space shaft (149) from the belt drive (150);
a plurality of dragger shafts (153) that are rotatable by the belt drive (150), and, for each dragger shaft (153), a dragger clutch (158D) for selectively connecting and disconnecting the dragger shaft (153) from the belt drive (150); and
a controller for controlling operation of the belt drive (150) and the clutches (158).

13. The array of claim 11 or 12, wherein the clutches (158) are electromechanical clutches (158), and preferably, wherein, for each shaft (149, 153) and clutch (158), when the clutch (158) is not activated, rotation of the belt drive (150) does not induce corresponding rotation of the shaft (149, 153), and, when the clutch (158) is activated, a magnetic connection is formed between the shaft (149, 153) and the clutches (158), such that rotation of the belt drive (150) induces rotation of the shaft (149, 153), and even more preferably, wherein, when the clutches (158) are activated, rotation of the belt drive (150) in a first direction causes rotation of the cooking space shaft (149) and the dragger shaft (153) in the same first direction, and rotation of the belt drive (150) in the opposite direction causes rotation of the cooking space shaft (149) and the dragger shaft (153) in the same opposite direction.

14. A method of preparing a food product, comprising:
loading an uncooked food product into a cooking space (120) defined by a bottom heater (116) and a top heater (114);
axially lowering the top heater (114) relative to the bottom heater (116) to thereby press the uncooked food product;
cooking the food product by applying heat to the bottom heater (116) and top heater (114);
axially raising the top heater (114) relative to the bottom heater (116);
and horizontally displacing the food product to a prepared food tray (130) with a dragger (122);
wherein the axially lowering, axially raising, and horizontally displacing steps are performed through selective operation of an integrated drive system (135);
**characterized in that**
the integrated drive system (135) comprises a belt drive (150); a plurality of cooking space shafts (149) that are rotatable by the belt drive (150), and, for each cooking space shaft (149), a cooking space clutch (158C) for selectively connecting and disconnecting the cooking space shaft (149) from the belt drive (150); a plurality of dragger shafts (153) that are rotatable by the belt drive (150), and, for each dragger shaft (153), a dragger clutch (158D) for selectively connecting and disconnecting the dragger shaft (153) from the belt drive (150); and a controller for controlling operation of the belt drive (150) and the clutches (158); and
the axially lowering and axially raising steps further comprise operating the cooking space shaft (149) with the belt drive (150) while the dragger clutch (158D) is disengaged; and
the horizontally displacing step comprises operating the dragger shaft (153) with the belt drive (150) while the cooking space shaft (149) is disengaged.

15. The method of claim 14, further comprising preparing multiple food products simultaneously in an array of cookers (110a-d), wherein each cooker (110a-d) comprises a separate bottom heater (116), top heater (114), prepared food tray (130), and dragger (122), and wherein the cookers (110a-d) in the array share a common drive system (135) for selectively controlling an axial dimension of each cooking space (120) and a horizontal displacement of each dragger (122), wherein the common drive system (135) comprises a belt drive (150); a plurality of cooking space shafts (149) that are rotatable by the belt drive (150), each cooking space shaft (149) configured to control a height of one cooking space (120), and, for each cooking space shaft (149), a cooking space clutch (158C) for selectively connecting and disconnecting the cooking space shaft (149) from the belt drive (150); a plurality of dragger shafts (153) that are rotatable by the belt drive (150), each dragger shaft (153) configured to control a horizontal displacement of a single dragger (122), and, for each dragger shaft (153), a dragger clutch (158D) for selectively connecting and disconnecting the dragger shaft (153) from the belt drive (150);
and wherein the method further comprises controlling operation of the belt drive (150) and the clutches (158), such that, for each cooker (110a-d), the belt drive (150) rotates the cooking space shaft (149) and dragger shaft (153) at different times.

## Patentansprüche

1. Kocher (110) zur Zubereitung eines Lebensmittelprodukts, umfassend:
eine untere Heizvorrichtung (116) und eine obere Heizvorrichtung (114), die zwischen sich einen axial steuerbaren Garraum (120) definieren, wobei der Garraum (120) dazu ausgelegt ist, ein ungegartes Lebensmittelprodukt aufzunehmen und dieses darin zu garen;
eine Schale für gegartes Lebensmittel (130) neben dem Garraum (120);
einen Schieber (122) mit einer Schiebefläche (124), die dazu ausgelegt ist, das gegarte Lebensmittelprodukt aus dem Garraum (120) in die Schale für gegartes Lebensmittel (130) zu befördern;
und ein integriertes Antriebssystem (135) zur Steuerung sowohl einer axialen Abmessung des Garraums (120) als auch einer horizontalen Bewegung des Schiebers (122),
**dadurch gekennzeichnet, dass**:
das integrierte Antriebssystem (135) umfasst:
einen Riemenantrieb (150);
eine Garraumwelle (149), die durch den Riemenantrieb (150) drehbar ist, und eine Garraumkupplung (158C) zum selektiven Verbinden und Trennen der Garraumwelle (149) vom Riemenantrieb (150);
eine Schieberwelle (153), die durch den Riemenantrieb (150) drehbar ist, und eine Schieberkupplung (158D) zum selektiven Verbinden und Trennen der Schieberwelle (153) vom Riemenantrieb (150); und
eine Steuerung zum Steuern des Betriebs des Riemenantriebs (150) und der Kupplungen (158).

2. Kocher (110) nach Anspruch 1, wobei der Schieber (122) einen Abstreifer (140) umfasst, der über eine Heizfläche der unteren Heizvorrichtung (116) und/oder der oberen Heizvorrichtung (114) verschiebbar ist, und vorzugsweise, wobei der Abstreifer (140) an einer der Schiebefläche (124) gegenüberliegenden Seite des Schiebers (122) angeordnet ist, sodass eine Bewegung des Schiebers (122) in einer ersten horizontalen Richtung ein zubereitetes Lebensmittel aus dem Garraum (120) auf die Schale für gegartes Lebensmittel (130) schiebt, und die Bewegung des Schiebers (122) in einer entgegengesetzten horizontalen Richtung bewirkt, dass der Abstreifer (140) die Heizfläche der unteren Heizvorrichtung (116) und/oder der oberen Heizvorrichtung (114) abstreift, und noch bevorzugter, wobei eine Höhe des Abstreifers (140) größer ist als eine Höhe der Schiebefläche (124).

3. Kocher (110) nach Anspruch 1, wobei es sich bei den Kupplungen (158) um elektromechanische Kupplungen (158) handelt.

4. Kocher (110) nach Anspruch 3, wobei, wenn die Kupplungen (158) nicht aktiviert sind, die Drehung des Riemenantriebs (150) keine entsprechende Drehung der Welle (149, 153) bewirkt, und bei aktivierten Kupplungen (158) eine magnetische Verbindung zwischen der Welle (149, 153) und einem Getriebe (155) hergestellt wird, das vom Riemenantrieb (150) gedreht wird, sodass die Drehung des Riemenantriebs (150) eine Drehung der Welle (149, 153) bewirkt.

5. Kocher (110) nach Anspruch 3 oder 4, wobei bei aktivierten Kupplungen (158) die Drehung des Riemenantriebs (150) in einer ersten Richtung eine Drehung der Garraumwelle (149) und der Schieberwelle (153) in derselben ersten Richtung bewirkt, und die Drehung des Riemenantriebs (150) in die entgegengesetzte Richtung eine Drehung der Garraumwelle (149) und der Schieberwelle (153) in dieselbe entgegengesetzte Richtung bewirkt.

6. Kocher (110) nach einem der Ansprüche 3 bis 5, wobei die Garraumwelle (149) Teil eines vertikalen Aktuators ist, der so ausgelegt ist, dass er die obere Heizvorrichtung (114) axial verschiebt, während die untere Heizvorrichtung (116) stationär bleibt, und wobei vorzugsweise der vertikale Aktuator so ausgelegt ist, dass er die obere Heizvorrichtung (114) axial verschiebt zwischen einer Beladungsposition, in der der Garraum (120) am größten ist, einer Garposition, in der der Garraum (120) einer gewünschten Höhe des Lebensmittelprodukts entspricht, und einer Reinigungsposition, in der ein Wischer (140) so ausgelegt ist, dass er sich eng zwischen der oberen Heizvorrichtung (114) und der unteren Heizvorrichtung (116) durch den Garraum (120) bewegt.

7. Kocher (110) nach Anspruch 6, wobei die Garraumwelle (149) ein Schraubengetriebe (149) umfasst, und wobei die obere Heizvorrichtung (114) an einer Laufmutter (147) befestigt ist, wobei das Schraubengetriebe (149) innerhalb der Laufmutter (147) so ausgebildet ist, dass es eine Spindel bildet, sodass die Betätigung des Riemens (150) eine vertikale Verschiebung der oberen Heizvorrichtung (114) bewirkt.

8. Kocher (110) nach einem der vorhergehenden Ansprüche, wobei die Schieberwelle (153) mit einem horizontalen Aktuator integriert ist, der so ausgelegt ist, dass er den Schieber (122) relativ zur unteren Heizvorrichtung (116), zur oberen Heizvorrichtung (114) und zur Schale für gegartes Lebensmittel (130) horizontal verschiebt, und wobei vorzugsweise der horizontale Aktuator so ausgelegt ist, dass er den Schieber (122) zwischen einer Beladeposition, in der sich der Schieber (122) außerhalb des Garraums (120) erstreckt, einer Zwischenposition, in der sich der Schieber (122) innerhalb des Garraums (120) befindet, und einer Vorlaufposition, in der sich der Schieber (122) zumindest teilweise über der Schale für gegartes Lebensmittel (130) befindet, zu verschieben.

9. Kocher (110) nach Anspruch 8, wobei der horizontale Aktuator einen Schieberriemen (151) umfasst, der mechanisch mit der Schieberwelle (153) verbunden ist, und eine Schieberhalterung (125), die mechanisch mit dem Schieberriemen (151) und dem Schieber (122) verbunden ist, wobei die Betätigung des Schieberriemens (151) eine entsprechende Verschiebung der Schieberhalterung (125) bewirkt.

10. Kocher (110) nach einem der Ansprüche 8 bis 9, wobei die Steuerung so konfiguriert ist, dass sie die Bewegungsrichtung des Riemens (150), die Garraumkupplung (158C) und die Schieberkupplung (158D) nacheinander betätigt, um die folgende Abfolge von Schritten auszuführen:
Zurückziehen des Schiebers (122) in die Beladeposition;
Vorschieben des Schiebers (122) von der Beladeposition in die Zwischenposition, um dadurch ein ungegartes Lebensmittelprodukt in den Garraum (120) zu laden;
axiales Absenken der oberen Heizvorrichtung (114) relativ zur unteren Heizvorrichtung (116), um dadurch das ungegarte Lebensmittelprodukt anzudrücken;
nach dem Garen des Lebensmittelprodukts axiales Anheben der oberen Heizvorrichtung (114) relativ zur unteren Heizvorrichtung (116);
und horizontales Verschieben des Lebensmittelprodukts auf ein eine Schale (130) für zubereitetes Lebensmittel mit dem Schieber (122).

11. Anordnung der Kocher (110a-d) nach einem der Ansprüche 1 bis 10, wobei jeder der Kocher (110a-d) in der Anordnung eine separate untere Heizvorrichtung (116), eine obere Heizvorrichtung (114), eine Schale für gegartes Lebensmittel (130) und einen Schieber (122) umfasst, und wobei die Kocher (110a-d) in der Anordnung ein gemeinsames Antriebssystem (135) zur selektiven Steuerung einer axialen Abmessung jedes Garraums (120) und einer horizontalen Verschiebung jedes Schiebers (122) teilen.

12. Anordnung nach Anspruch 11, wobei das gemeinsame Antriebssystem umfasst:
einen Riemenantrieb (150);
eine Vielzahl von Garraumwellen (149), die durch den Riemenantrieb (150) drehbar sind, und für jede Garraumwelle (149) eine Garraumkupplung (158C) zum selektiven Verbinden und Trennen der Garraumwelle (149) vom Riemenantrieb (150);
eine Vielzahl von Schieberwellen (153), die durch den Riemenantrieb (150) drehbar sind, und für jede Schieberwelle (153) eine Schieberkupplung (158D) zum selektiven Verbinden und Trennen der Schieberwelle (153) vom Riemenantrieb (150); und
eine Steuerung zur Steuerung des Betriebs des Riemenantriebs (150) und der Kupplungen (158).

13. Anordnung nach Anspruch 11 oder 12, wobei die Kupplungen (158) elektromechanische Kupplungen (158) sind und vorzugsweise, wobei für jede Welle (149, 153) und Kupplung (158) bei nicht aktivierter Kupplung (158) die Drehung des Riemenantriebs (150) keine entsprechende Drehung der Welle (149, 153) auslöst, und bei Aktivierung der Kupplung (158) eine magnetische Verbindung zwischen der Welle (149, 153) und den Kupplungen (158) hergestellt wird, sodass die Drehung des Riemenantriebs (150) eine Drehung der Welle (149, 153) auslöst, und noch bevorzugter, wobei bei Aktivierung der Kupplungen (158) die Drehung des Riemenantriebs (150) in einer ersten Richtung eine Drehung der Garraumwelle (149) und der Schieberwelle (153) in derselben ersten Richtung bewirkt und die Drehung des Riemenantriebs (150) in der entgegengesetzten Richtung eine Drehung der Garraumwelle (149) und der Schieberwelle (153) in derselben entgegengesetzten Richtung bewirkt.

14. Verfahren zur Zubereitung eines Lebensmittelprodukts, umfassend:
Einlegen eines ungegarten Lebensmittelprodukts in einen Garraum (120), der durch eine untere Heizvorrichtung (116) und eine obere Heizvorrichtung (114) begrenzt ist;
axiales Absenken der oberen Heizvorrichtung (114) relativ zur unteren Heizvorrichtung (116), um dadurch das ungegarte Lebensmittelprodukt anzudrücken;
Garen des Lebensmittelprodukts durch Zuführen von Wärme zur unteren Heizvorrichtung (116) und zur oberen Heizvorrichtung (114);
axiales Anheben der oberen Heizvorrichtung (114) relativ zur unteren Heizvorrichtung (116);
und horizontales Verschieben des Lebensmittelprodukts auf eine Schale (130) für zubereitetes Lebensmittel mittels eines Schiebers (122);
wobei die Schritte des axialen Absenkens, des axialen Anhebens und des horizontalen Verschiebens durch selektiven Betrieb eines integrierten Antriebssystems (135) ausgeführt werden;
**dadurch gekennzeichnet, dass**
das integrierte Antriebssystem (135) einen Riemenantrieb (150); eine Vielzahl von Garraumwellen (149), die durch den Riemenantrieb (150) drehbar sind, und für jede Garraumwelle (149) eine Garraumkupplung (158C) zum selektiven Verbinden und Trennen der Garraumwelle (149) vom Riemenantrieb (150); eine Vielzahl von Schieberwellen (153), die durch den Riemenantrieb (150) drehbar sind, und für jede Schieberwelle (153) eine Schieberkupplung (158D) zum selektiven Verbinden und Trennen der Schieberwelle (153) vom Riemenantrieb (150); sowie eine Steuerung zur Steuerung des Betriebs des Riemenantriebs (150) und der Kupplungen (158) umfasst; und
die Schritte des axialen Absenkens und des axialen Anhebens ferner den Betrieb der Garraumwelle (149) mit dem Riemenantrieb (150) umfassen, während die Schieberkupplung (158D) ausgekuppelt ist; und
der Schritt des horizontalen Verschiebens den Betrieb der Schieberwelle (153) mit dem Riemenantrieb (150) umfasst, während die Garraumwelle (149) ausgekuppelt ist.

15. Verfahren nach Anspruch 14, das ferner das gleichzeitige Zubereiten mehrerer Lebensmittelprodukte in einer Anordnung von Kochern (110a-d) umfasst, wobei jeder Kocher (110a-d) eine separate untere Heizvorrichtung (116), eine obere Heizvorrichtung (114), eine Schale (130) für zubereitetes Lebensmittel und einen Schieber (122) umfasst, und wobei die Kocher (110a-d) in der Anordnung ein gemeinsames Antriebssystem (135) zur selektiven Steuerung einer axialen Abmessung jedes Garraums (120) und einer horizontalen Verschiebung jedes Schiebers (122) teilen, wobei das gemeinsame Antriebssystem (135) einen Riemenantrieb (150); eine Vielzahl von Garraumwellen (149), die durch den Riemenantrieb (150) drehbar sind, wobei jede Garraumwelle (149) so ausgelegt ist, dass sie eine Höhe eines Garraums (120) steuert, und für jede Garraumwelle (149) eine Garraumkupplung (158C) zum selektiven Verbinden und Trennen der Garraumwelle (149) vom Riemenantrieb (150); eine Vielzahl von Schieberwellen (153), die durch den Riemenantrieb (150) drehbar sind, wobei jede Schieberwelle (153) so ausgelegt ist, dass sie eine horizontale Verschiebung eines einzelnen Schiebers (122) steuert, und für jede Schieberwelle (153) eine Schieberkupplung (158D) zum selektiven Verbinden und Trennen der Schieberwelle (153) vom Riemenantrieb (150) umfasst;
und wobei das Verfahren ferner das Steuern des Betriebs des Riemenantriebs (150) und der Kupplungen (158) umfasst, sodass der Riemenantrieb (150) für jeden Kocher (110a-d) die Garraumwelle (149) und die Schieberwelle (153) zu unterschiedlichen Zeitpunkten dreht.

## Revendications

1. Cuiseur (110) pour la préparation d'un produit alimentaire, comprenant :
un élément chauffant inférieur (116) et un élément chauffant supérieur (114) définissant entre eux un espace de cuisson axialement contrôlable (120), l'espace de cuisson (120) étant configuré pour recevoir un produit alimentaire non cuit et pour cuire le produit alimentaire à l'intérieur de celui-ci ;
un plateau d'aliments préparés (130) adjacent à l'espace de cuisson (120) ;
un entraîneur (122) avec une surface d'entraînement (124) qui est configuré pour déplacer le produit alimentaire cuit de l'espace de cuisson (120) vers le plateau d'aliments préparés (130) ;
et un système d'entraînement intégré (135) pour commander à la fois une dimension axiale de l'espace de cuisson (120) et un déplacement horizontal de l'entraîneur (122),
**caractérisé en ce que** :
le système d'entraînement intégré (135) comprend :
un entraînement par courroie (150) ;
un arbre d'espace de cuisson (149) qui peut être mis en rotation par l'entraînement par courroie (150), et un embrayage d'espace de cuisson (158C) pour connecter et déconnecter sélectivement l'arbre d'espace de cuisson (149) de l'entraînement par courroie (150) ;
un arbre d'entraîneur (153) qui peut être mis en rotation par l'entraînement par courroie (150), et un embrayage d'entraîneur (158D) pour connecter et déconnecter sélectivement l'arbre d'entraîneur (153) de l'entraînement par courroie (150) ; et
un contrôleur pour commander le fonctionnement de l'entraînement par courroie (150) et des embrayages (158).

2. Cuiseur (110) selon la revendication 1, dans lequel l'entraîneur (122) comprend un racleur (140) qui peut être déplacé de manière coulissante sur une surface de chauffe de l'un ou des deux parmi l'élément chauffant inférieur (116) et l'élément chauffant supérieur (114), et de préférence, dans lequel le racleur (140) est configuré sur une face de l'entraîneur (122) qui est opposée à la surface d'entraînement (124), de sorte que le mouvement de l'entraîneur (122) dans une première direction horizontale pousse un produit alimentaire préparé de l'espace de cuisson (120) vers le plateau d'aliments préparés (130), et le mouvement de l'entraîneur (122) dans une direction horizontale opposée amène le racleur (140) à racler la surface de chauffe de l'un ou des deux parmi l'élément chauffant inférieur (116) et l'élément chauffant supérieur (114), et plus préférablement, dans lequel une hauteur du racleur (140) est supérieure à une hauteur de la surface d'entraînement (124).

3. Cuiseur (110) selon la revendication 1, dans lequel les embrayages (158) sont des embrayages électromécaniques (158).

4. Cuiseur (110) selon la revendication 3, dans lequel, lorsque les embrayages (158) ne sont pas activés, la rotation de l'entraînement par courroie (150) n'induit pas de rotation correspondante de l'arbre (149, 153), et, lorsque les embrayages (158) sont activés, une connexion magnétique est formée entre l'arbre (149, 153) et un engrenage (155) qui est mis en rotation par l'entraînement par courroie (150), de sorte que la rotation de l'entraînement par courroie (150) induit la rotation de l'arbre (149, 153).

5. Cuiseur (110) selon la revendication 3 ou 4, dans lequel, lorsque les embrayages (158) sont activés, la rotation de l'entraînement par courroie (150) dans une première direction entraîne la rotation de l'arbre d'espace de cuisson (149) et de l'arbre d'entraîneur (153) dans la même première direction, et la rotation de l'entraînement par courroie (150) dans la direction opposée entraîne la rotation de l'arbre d'espace de cuisson (149) et de l'arbre d'entraîneur (153) dans la même direction opposée.

6. Cuiseur (110) selon l'une quelconque des revendications 3 à 5, dans lequel l'arbre d'espace de cuisson (149) fait partie d'un actionneur vertical configuré pour déplacer axialement l'élément chauffant supérieur (114) tandis que l'élément chauffant inférieur (116) reste stationnaire, et de préférence, dans lequel l'actionneur vertical est configuré pour déplacer axialement l'élément chauffant supérieur (114) entre une position de chargement à laquelle l'espace de cuisson (120) est maximal, une position de cuisson à laquelle l'espace de cuisson (120) correspond à une hauteur souhaitée du produit alimentaire, et une position de nettoyage dans laquelle un racleur (140) est configuré pour se déplacer à travers l'espace de cuisson (120) de manière ajustée entre l'élément chauffant supérieur (114) et l'élément chauffant inférieur (116).

7. Cuiseur (110) selon la revendication 6, dans lequel l'arbre d'espace de cuisson (149) comprend un engrenage à vis (149), et dans lequel l'élément chauffant supérieur (114) est fixé à un écrou mobile (147), dans lequel l'engrenage à vis (149) est configuré à l'intérieur de l'écrou mobile (147) pour former un vérin à vis, de sorte que l'actionnement de la courroie (150) entraîne un déplacement vertical de l'élément chauffant supérieur (114).

8. Cuiseur (110) selon l'une quelconque des revendications précédentes, dans lequel l'arbre d'entraîneur (153) est intégré à un actionneur horizontal configuré pour déplacer horizontalement l'entraîneur (122) par rapport à l'élément chauffant inférieur (116), à l'élément chauffant supérieur (114) et au plateau d'aliments préparés (130), et de préférence, dans lequel l'actionneur horizontal est configuré pour déplacer l'entraîneur (122) entre une position de chargement, dans laquelle l'entraîneur (122) s'étend à l'extérieur de l'espace de cuisson (120), une position intermédiaire dans laquelle l'entraîneur (122) est situé à l'intérieur de l'espace de cuisson (120), et une position avancée dans laquelle l'entraîneur (122) est situé au moins partiellement au-dessus du plateau d'aliments préparés (130).

9. Cuiseur (110) selon la revendication 8, dans lequel l'actionneur horizontal comprend une courroie d'entraîneur (151) connectée mécaniquement à l'arbre d'entraîneur (153), et un support d'entraîneur (125) connecté mécaniquement à la courroie d'entraîneur (151) et à l'entraîneur (122), dans lequel l'actionnement de la courroie d'entraîneur (151) entraîne un déplacement correspondant du support d'entraîneur (125).

10. Cuiseur (110) selon l'une quelconque des revendications 8 à 9, dans lequel le contrôleur est configuré pour actionner séquentiellement la direction du mouvement de la courroie (150), l'embrayage d'espace de cuisson (158C) et l'embrayage d'entraîneur (158D), de manière à réaliser la séquence d'étapes suivante :
le retrait de l'entraîneur (122) vers la position de chargement ;
l'avancement de l'entraîneur (122) de la position de chargement à la position intermédiaire pour charger ainsi un produit alimentaire non cuit dans l'espace de cuisson (120) ;
l'abaissement axial de l'élément chauffant supérieur (114) par rapport à l'élément chauffant inférieur (116) pour presser ainsi le produit alimentaire non cuit ;
à la suite de la cuisson du produit alimentaire, l'élévation axiale de l'élément chauffant supérieur (114) par rapport à l'élément chauffant inférieur (116) ;
et le déplacement horizontal du produit alimentaire vers un plateau d'aliments préparés (130) avec l'entraîneur (122).

11. Réseau de cuiseurs (110a-d) selon l'une quelconque des revendications 1 à 10, dans lequel chacun des cuiseurs (110a-d) dans le réseau comprend un élément chauffant inférieur (116), un élément chauffant supérieur (114), un plateau d'aliments préparés (130) et un entraîneur (122) distincts, et dans lequel les cuiseurs (110a-d) dans le réseau partagent un système d'entraînement commun (135) pour commander sélectivement une dimension axiale de chaque espace de cuisson (120) et un déplacement horizontal de chaque entraîneur (122).

12. Réseau selon la revendication 11, dans lequel le système d'entraînement commun comprend :
un entraînement par courroie (150) ;
une pluralité d'arbres d'espace de cuisson (149) qui peuvent être mis en rotation par l'entraînement par courroie (150), et, pour chaque arbre d'espace de cuisson (149), un embrayage d'espace de cuisson (158C) pour connecter et déconnecter sélectivement l'arbre d'espace de cuisson (149) de l'entraînement par courroie (150) ;
une pluralité d'arbres d'entraîneur (153) qui peuvent être mis en rotation par l'entraînement par courroie (150), et, pour chaque arbre d'entraîneur (153), un embrayage d'entraîneur (158D) pour connecter et déconnecter sélectivement l'arbre d'entraîneur (153) de l'entraînement par courroie (150) ; et
un contrôleur pour commander le fonctionnement de l'entraînement par courroie (150) et des embrayages (158).

13. Réseau selon la revendication 11 ou 12, dans lequel les embrayages (158) sont des embrayages électromécaniques (158), et de préférence, dans lequel, pour chaque arbre (149, 153) et embrayage (158), lorsque l'embrayage (158) n'est pas activé, la rotation de l'entraînement par courroie (150) n'induit pas de rotation correspondante de l'arbre (149, 153), et, lorsque l'embrayage (158) est activé, une connexion magnétique est formée entre l'arbre (149, 153) et les embrayages (158), de sorte que la rotation de l'entraînement par courroie (150) induit la rotation de l'arbre (149, 153), et encore plus préférablement, dans lequel, lorsque les embrayages (158) sont activés, la rotation de l'entraînement par courroie (150) dans une première direction entraîne la rotation de l'arbre d'espace de cuisson (149) et de l'arbre d'entraîneur (153) dans la même première direction, et la rotation de l'entraînement par courroie (150) dans la direction opposée entraîne la rotation de l'arbre d'espace de cuisson (149) et de l'arbre d'entraîneur (153) dans la même direction opposée.

14. Procédé de préparation d'un produit alimentaire, comprenant :
le chargement d'un produit alimentaire non cuit dans un espace de cuisson (120) défini par un élément chauffant inférieur (116) et un élément chauffant supérieur (114) ;
l'abaissement axial de l'élément chauffant supérieur (114) par rapport à l'élément chauffant inférieur (116) pour presser ainsi le produit alimentaire non cuit ;
la cuisson du produit alimentaire en appliquant de la chaleur à l'élément chauffant inférieur (116) et à l'élément chauffant supérieur (114) ;
l'élévation axiale de l'élément chauffant supérieur (114) par rapport à l'élément chauffant inférieur (116) ;
et le déplacement horizontal du produit alimentaire vers un plateau d'aliments préparés (130) avec un entraîneur (122) ;
dans lequel les étapes d'abaissement axial, d'élévation axiale et de déplacement horizontal sont réalisées par une opération sélective d'un système d'entraînement intégré (135) ;
**caractérisé en ce que**
le système d'entraînement intégré (135) comprend un entraînement par courroie (150) ; une pluralité d'arbres d'espace de cuisson (149) qui peuvent être mis en rotation par l'entraînement par courroie (150), et, pour chaque arbre d'espace de cuisson (149), un embrayage d'espace de cuisson (158C) pour connecter et déconnecter sélectivement l'arbre d'espace de cuisson (149) de l'entraînement par courroie (150) ; une pluralité d'arbres d'entraîneur (153) qui peuvent être mis en rotation par l'entraînement par courroie (150), et, pour chaque arbre d'entraîneur (153), un embrayage d'entraîneur (158D) pour connecter et déconnecter sélectivement l'arbre d'entraîneur (153) de l'entraînement par courroie (150) ; et un contrôleur pour commander le fonctionnement de l'entraînement par courroie (150) et des embrayages (158) ; et
les étapes d'abaissement axial et d'élévation axiale comprennent en outre la commande de l'arbre d'espace de cuisson (149) avec l'entraînement par courroie (150) tandis que l'embrayage d'entraîneur (158D) est désengagé ; et
l'étape de déplacement horizontal comprend l'actionnement de l'arbre d'entraîneur (153) avec l'entraînement par courroie (150) tandis que l'arbre d'espace de cuisson (149) est désengagé.

15. Procédé selon la revendication 14, comprenant en outre la préparation de multiples produits alimentaires simultanément dans un réseau de cuiseurs (110a-d), dans lequel chaque cuiseur (110a-d) comprend un élément chauffant inférieur (116), un élément chauffant supérieur (114), un plateau d'aliments préparés (130) et un entraîneur (122) distincts, et dans lequel les cuiseurs (110a-d) dans le réseau partagent un système d'entraînement commun (135) pour commander sélectivement une dimension axiale de chaque espace de cuisson (120) et un déplacement horizontal de chaque entraîneur (122), dans lequel le système d'entraînement commun (135) comprend un entraînement par courroie (150) ; une pluralité d'arbres d'espace de cuisson (149) qui peuvent être mis en rotation par l'entraînement par courroie (150), chaque arbre d'espace de cuisson (149) étant configuré pour commander une hauteur d'un espace de cuisson (120), et, pour chaque arbre d'espace de cuisson (149), un embrayage d'espace de cuisson (158C) pour connecter et déconnecter sélectivement l'arbre d'espace de cuisson (149) de l'entraînement par courroie (150) ; une pluralité d'arbres d'entraîneur (153) qui peuvent être mis en rotation par l'entraînement par courroie (150), chaque arbre d'entraîneur (153) étant configuré pour commander un déplacement horizontal d'un seul entraîneur (122), et, pour chaque arbre d'entraîneur (153), un embrayage d'entraîneur (158D) pour connecter et déconnecter sélectivement l'arbre d'entraîneur (153) de l'entraînement par courroie (150) ;
et dans lequel le procédé comprend en outre la commande du fonctionnement de l'entraînement par courroie (150) et des embrayages (158), de sorte que, pour chaque cuiseur (110a-d), l'entraînement par courroie (150) met en rotation l'arbre d'espace de cuisson (149) et l'arbre d'entraîneur (153) à des moments différents.
